# EUROPÄISCHE PATENTSCHRIFT

(11) **EP 1 079 085 B1**
(45) Veröffentlichungstag und Bekanntmachung des Hinweises auf die Patenterteilung: **17.03.2004**
(21) Anmeldenummer: 00115983.9
(22) Anmeldetag: 26.07.2000
(51) Int. Cl.: F02B 61/00, F02B 63/04, F02N 15/02, F02N 11/04, B60K 6/04, B60L 7/00

(54) **Brennkraftmaschine zum Antrieb eines Kraftfahrzeuges**
Internal combustion engine for driving a vehicle
Moteur à combustion interne pour l'entraînement d'un véhicule

(30) Priorität: 21.08.1999 DE 19939814
(43) Veröffentlichungstag der Anmeldung: 28.02.2001
(73) Patentinhaber: Bayerische Motoren Werke Aktiengesellschaft, 80809 München (DE)
(72) Erfinder: Ohnemus, Ulrich, 82285 Hattenhofen (DE); Maurer, Michael, Dr., 80995 München (DE)

(56) Entgegenhaltungen:
- EP-A- 0 916 546
- EP-A- 0 925 979
- US-A- 4 533 011
- US-A- 5 635 805

## Beschreibung

Die Erfindung betrifft eine Brennkraftmaschine zum Antrieb eines Kraftfahrzeuges, mit einem an ein Ende der Abtriebswelle (bzw. Kurbelwelle) der Brennkraftmaschine angekoppelten Fahrzeugantriebs-Getriebe sowie mit einer über ein Nebengetriebe mit der Brennkraftmaschinen-Abtriebswelle verbundenen Elektromaschine, die wahlweise als Anlassermotor oder als (elektrischer) Stromgenerator betreibbar ist. Zum technischen Umfeld wird neben der DE 32 46 230 A1 insbesondere auf die DE 197 45 995 A1 verwiesen und geht von der EP 0 916 546 A2 aus.

Die erstgenannte Schrift zeigt eine Getriebeanordnung zur Bereitstellung unterschiedlicher Getriebeübersetzungen in Abhängigkeit von der Richtung des Kraftflusses, und zwar angeordnet an einer Fahrzeug-Brennkraftmaschine. Mit dieser Getriebeanordnung kann eine einzige Elektromaschine sowohl als (üblicher) Anlassermotor für die Brennkraftmaschine als auch (bei laufender Brennkraftmaschine) als üblicher, von dieser angetriebener elektrischer Stromgenerator fungieren. Selbstverständlich stellt diese Funktionsvereinigung in einem einzigen Bauteil einen erheblichen Vorteil dar.

Auch die eingangs zweitgenannte Schrift zeigt eine derartige Brennkraftmaschinen-Elektromaschinen-Baugruppe, wobei die Elektromaschine in das (ansonsten übliche) Fahrzeugantriebs-Getriebe integriert ist. Sowohl bei diesem bekannten Stand der Technik als auch beim erstgenannten Stand der Technik ist also ein sog. Nebengetriebe, über welches die besagte Elektromaschine mit der Abtriebswelle der Brennkraftmaschine verbunden ist, sozusagen am gleichen Ende der Abtriebswelle angebunden, wie das Fahrzeugantriebs-Getriebe.

Aus der EP 0 916 546 A2 ist eine Brennkraftmaschine zum Antrieb eines Kraftfahrzeuges bekannt, mit einem an ein Ende der Abtriebswelle der Brennkraftmaschine angekoppelten Fahrzeugantriebs-Getriebe sowie mit einer über ein Nebengetriebe mit der Brennkraftmaschinen-Abtriebswelle verbundenen Elektromaschine, die wahlweise als Anlassermotor oder als Stromgenerator betreibbar ist, wobei das als endloses Zugmittelgetriebe oder Rädergetriebe ausgebildete Nebengetriebe mit der Abtriebswelle der Brennkraftmaschine an deren dem Fahrzeug-Antriebs-Getriebe gegenüberliegenden Ende über eine schaltbare Kupplung verbindbar ist, und dass in das Nebengetriebe zumindest ein weiteres mechanisch antreibbares Hilfsaggregat des Kraftfahrzeuges oder der Brennkraftmaschine eingebunden ist und zwischen dem Nebengetriebe und der Abtriebswelle ein ggf. mehrstufiges Übersetzungsgetriebe vorgesehen ist.

Aufgabe der vorliegenden Erfindung ist es, eine Möglichkeit der Rückgewinnung der Schubenergie bzw. Bremsenergie des Kraftfahrzeuges auch bei vom Fahrzeug-Antriebsgetriebe abgekoppelter Brennkraftmaschine aufzuzeigen.

Diese Aufgabe wird dadurch gelöst, dass die Drehwelle der Elektromaschine bei geöffneter schaltbarer Kupplung zwischen der Abtriebswelle und dem Nebengetriebe von einer mit der Abtriebsseite des Fahrzeugantriebs-Getriebes verbundenen Nebenwelle verbindbar ist.

Erfindungsgemäß enthält das sog. Nebengetriebe, über welches die Elektromaschine mit der Brennkraftmaschinen-Abtriebswelle verbunden ist, ein weiteres mechanisch anzutreibendes Hilfsaggregat, so bspw. bzw. insbesondere den Kompressor der Klimaanlage des Kraftfahrzeuges. Ist - wie weiterhin angegeben - das Nebengetriebe über eine schaltbare Kupplung mit der Abtriebswelle verbindbar, so kann bei stehender, d.h. nicht betriebener Brennkraftmaschine das Nebengetriebe von der Abtriebswelle abgekoppelt werden. Dann kann durch Betrieb der Elektromaschine als Elektromotor dieses Hilfsaggregat (bzw. der Klimakompressor) auch bei stillstehender Brennkraftmaschine angetrieben werden (und somit bspw. die Fahrzeug-Klimaanlage zur Klimatisierung des Fahrzeug-Innenraumes betrieben werden). Da jedoch das anzutreibende bzw. mechanisch antreibbare Hilfsaggregat der Brennkraftmaschine bzw. des Kraftfahrzeuges Bauraum benötigt, ist es praktisch nicht möglich, dieses zusätzlich im Bereich des Fahrzeugantriebs-Getriebes anzuordnen, so daß weiterhin vorgeschlagen wird, das besagte, mit der Brennkraftmaschinen-Abtriebswelle verbundene und die Elektromaschine sowie das Hilfsaggregat enthaltende Nebengetriebe am dem Fahrzeugantriebs-Getriebe gegenüberliegenden Ende der Abtriebswelle anzuordnen.

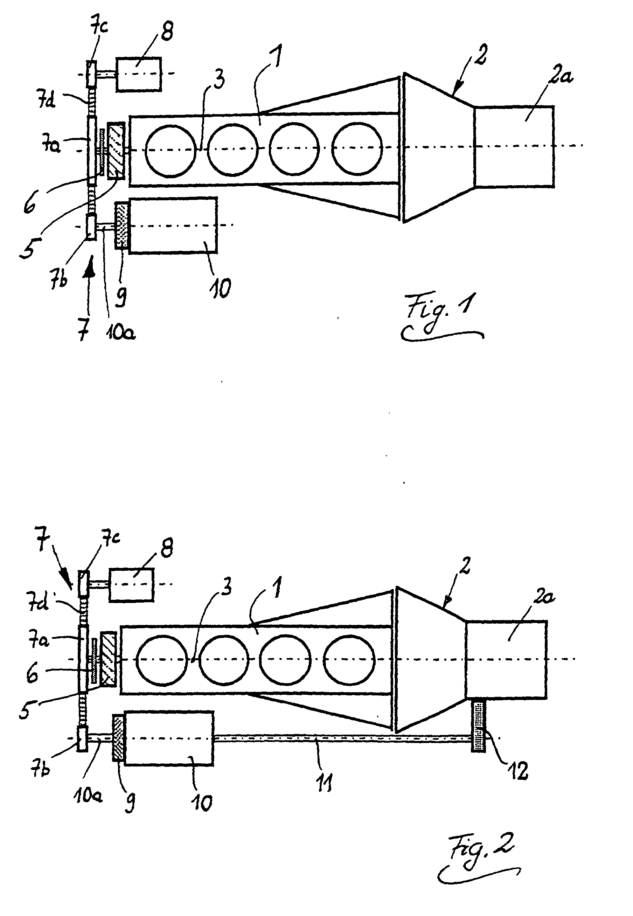

Näher erläutert wird die Erfindung anhand mehrerer lediglich prinzipiell dargestellter bevorzugter Ausführungsbeispiele, die in den beigefügten Figuren 1 -3 dargestellt sind. Dabei sind gleiche Elemente stets mit den gleichen Bezugsziffern bezeichnet. Erfindungswesentlich können sämtliche näher beschriebene Merkmale sein.

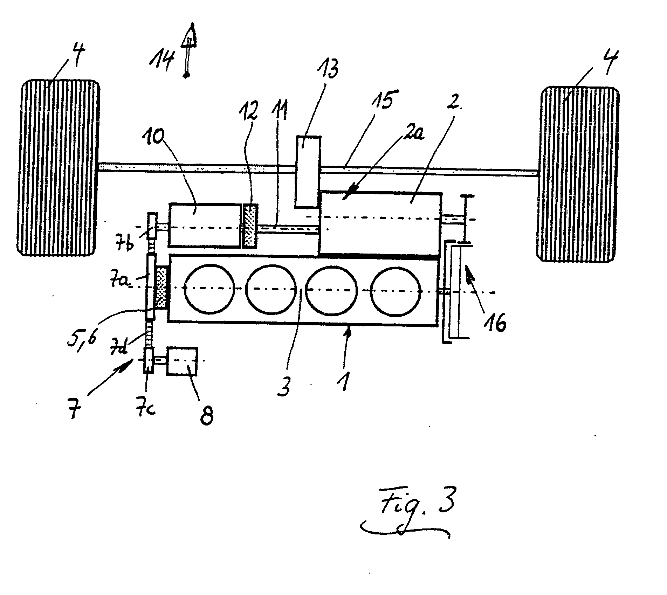

Mit der Bezugsziffer 1 ist die hier als vierzylindrige Reihen-Hubkolben-Maschine ausgebildete Brennkraftmaschine bezeichnet, die dem Antrieb eines Kraftfahrzeuges dient und an die folglich ein Fahrzeugantriebs-Getriebe 2 angeschlossen ist. Mit der Bezugsziffer 3 ist die Achse der nicht dargestellten Abtriebswelle bzw. Kurbelwelle der Brennkraftmaschine 1 bezeichnet, wobei im weiteren für diese Brennkraftmaschinen-Abtriebswelle ebenfalls die Bezugsziffer 3 verwendet wird. Im Fahrzeugantriebs-Getriebe 2 wird die Drehzahl der Abtriebswelle 3 geeignet und veränderbar untersetzt, so daß über die nicht dargestellte Ausgangswelle dieses Fahrzeugantriebs-Getriebes 2 letztlich die Antriebsräder 4 des Kraftfahrzeuges (vgl. hierzu die später noch ausführlicher erläuterte Figur 3) angetrieben werden.

Zurückkommend auf das Ausführungsbeispiel nach Figur 1, bei welchem das Fahrzeugantriebs-Getriebe 2 im wesentlichen direkt an das eine Ende der Brennkraftmaschine 1 angeflanscht ist, erkennt man am diesem Fahrzeugantriebs-Getriebe 2 gegenüberliegenden Ende der Brennkraftmaschine 1 ein an das dortige Ende der Brennkraftmaschinen-Abtriebswelle 3 angekoppeltes Übersetzungsgetriebe 5, an dessen anderer Seite eine schaltbare Kupplung 6 vorgesehen ist. Die Rotation der Abtriebswelle 3 wird somit im Übersetzungsgetriebe 5 in geeigneter Weise übersetzt und in die schaltbare Kupplung 6 eingeleitet und ist von da aus bei geschlossener Kupplung 6 in ein sog. Nebengetriebe 7 einleitbar. Hierzu ist an die nicht mit einer separaten Bezugsziffer bezeichnete, bevorzugt auf der gleichen Drehachse 3 wie die Brennkraftmaschinen-Abtriebswelle liegende Ausgangswelle dieser Kupplung 6 ein erstes Treibrad 7a, welches Bestandteil des Nebengetriebes 7 ist, drehfest aufgesetzt. Bei geöffneter Kupplung 6 hingegen besteht keine Drehverbindung zwischen dem Übersetzungsgetriebe 5 und dem ersten Treibrad 7a des Nebengetriebes 7.

Weitere wesentliche Bestandteile des Nebengetriebes 7, welches hier (bevorzugt) als endloses Zugmittelgetriebe ausgebildet ist, sind neben dem endlosen Zugmittel 7d (bspw. als Poly-V-Riemen ausgebildet) ein zweites Treibrad 7b sowie ein drittes Treibrad 7c. Letzteres ist drehfest mit der Drehwelle eines sog. Hilfsaggregates 8 verbunden, während das zweite Treibrad 7b bevorzugt über eine ggf. veränderbare Übersetzungsstufe 9 mit der lediglich durch ihre Drehachse 10a dargestellte Drehwelle (ebenfalls mit 10a bezeichnet) einer Elektromaschine 10 verbunden ist. Diese Elektromaschine 10 kann wahlweise entweder als Elektromotor oder als elektrischer Stromgenerator betrieben werden.

Als elektrischer Stromgenerator wird die Elektromaschine 10 bei Betrieb der Brennkraftmaschine 1, d.h. bei laufender Brennkraftmaschine 1 betrieben.

Hierzu ist die schaltbare Kupplung 6 geschlossen, so daß das Nebengetriebe 7 von der Brennkraftmaschinen-Abtriebswelle 3 angetrieben wird. Neben der Elektromaschine 10 wird dabei auch das Hilfsaggregat 8 der Brennkraftmaschine 1 oder des von dieser angetriebenen Kraftfahrzeuges angetrieben. Die Übersetzungsverhältnisse im Übersetzungsgetriebe 5 sowie in der ggf. veränderbaren Übersetzungsstufe 9 sind hierfür geeignet gewählt bzw. eingestellt.

Als Elektromotor wird die Elektromaschine 10 bei stillstehender Brennkraftmaschine 1 betrieben. Dabei kann die Elektromaschine 10 als Anlassermotor für die Brennkraftmaschine 1 fungieren, wenn die schaltbare Kupplung 6 geschlossen ist. Auch für diesen Betriebsfall sind die Übersetzungsverhältnisse im Übersetzungsgetriebe 5 sowie in der ggf. veränderbaren Übersetzungsstufe 9 geeignet gewählt bzw. eingestellt.

Als Elektromotor kann die Elektromaschine 10 aber auch bei stillstehender Brennkraftmaschine 1 betrieben werden, wenn die schaltbare Kupplung 6 geöffnet ist. Dann treibt die Elektromaschine 10 das (zumindest eine im Nebengetriebe 7 angeordnete) Hilfsaggregat 8 an. Bevorzugt handelt es sich bei diesem Hilfsaggregat 8 um den Kompressor der Klimaanlage des Kraftfahrzeuges. Somit kann bei stehender, d.h. nicht betriebener Brennkraftmaschine, wenn das Nebengetriebe 7 aufgrund der geöffneten Kupplung 6 von der Brennkraftmaschinen-Abtriebswelle 3 abgekuppelt ist, durch Betrieb der Elektromaschine 10 als Elektromotor dieses Hilfsaggregat 8 bzw. der Klimakompressor angetrieben und somit (bspw.) die Fahrzeug-Klimaanlage zur Klimatisierung des Fahrzeug-Innenraumes betrieben werden. Auch für diesen Betriebsfall sind die Übersetzungsverhältnisse im Übersetzungsgetriebe 5 sowie in der ggf. veränderbaren Übersetzungsstufe 9 geeignet gewählt bzw. eingestellt.

Bevorzugt ist das Übersetzungsgetriebe 5 in Form eines Planetengetriebes oder nach Art eines dem Fachmann bekannten Harmonic-Drive-Getriebes, bevorzugt als sog. Gleitkeilgetriebe (vgl. hierzu DE 25 45 681 C2) oder als Hirn-Getriebe (beschrieben im Sonderdruck "Antriebstechnik" aus der DE-Zeitschrift KEM 11/96 beschrieben) ausgebildet. Diese Getriebe haben den hier entscheidenden Vorteil, daß ihre Antriebswellen und Abtriebswellen koaxial zueinander sind und zeichnen sich ferner durch geringen benötigten Bauraum sowie durch relativ einfachen Aufbau bei gleichzeitig hoher Zuverlässigkeit aus. Anerkanntermaßen besitzen diese Getriebe eine hohe Leistungsdichte, vorteilhafterweise eine geringe Trägheit der einzelnen ohnehin nur wenigen Bestandteile, und zeichnen sich darüberhinaus durch geräuscharmen Lauf aus. Bevorzugt ist dieses im weiteren Sinne als Planetengetriebe ausgebildete Übersetzungsgetriebe 5 verblockbar, so daß zumindest zwei unterschiedliche Übersetzungsverhältnisse einstellbar sind. Hiermit ist es dann nicht weiter erforderlich, daß die Übersetzungsstufe 9 einstellbar ist, d.h. bei der Übersetzungsstufe 9 kann es sich um eine starre Übersetzung handeln und die unterschiedlichen benötigten Übersetzungsverhältnisse für die Funktion der Elektromaschine 10 als Elektromotor einerseits und als Stromgenerator andererseits werden durch Verblockung bzw entsprechende Freigabe des in Form eines Planetengetriebes ausgebildeten Übersetzungsgetriebes 5 hergestellt. Dabei sei darauf hingewiesen, daß ein derartiges Übersetzungsgetriebe 5 ein solches der einstufigen Bauart sein kann, d.h. daß lediglich eine Übersetzungsstufe vorgesehen ist. Ggf. bzw. bedarfsweise kann jedoch auch ein mehrstufiges derartiges Übersetzungsgetriebe 5 vorgesehen sein.

Beim Ausführungsbeispiel nach Figur 2 ist die Drehwelle 10a der Elektromaschine 10 bei geöffneter schaltbarer Kupplung 6 zwischen der Abtriebswelle 2 und dem Nebengetriebe 7 von einer mit der Abtriebsseite 2a des Fahrzeugantriebs-Getriebes 2 verbundenen Nebenwelle 11 verbindbar, und zwar ebenfalls über eine Schaltkupplung 12. Der Begriff "Abtriebsseite 2a" steht dabei dafür, daß an dieser Stelle die gleiche Wellendrehzahl abgegriffen werden kann, die letztlich auch dem Fahrzeug-Antrieb (bzw. dem in diesem vorgesehen Differential 13 - vgl. hierzu vorab Figur 3 - ) zur Verfügung steht. Zurückkommend auf das Ausführungsbeispiel nach Figur 2 kann somit über die Nebenwelle 11 die Elektromaschine 10 mit einer Drehzahl angetrieben werden, die direkt proportional zur der Fahrgeschwindigkeit des Kraftfahrzeuges ist. Im Hinblick auf die Energieaufnahme der dann als Stromgenerator arbeitenden Elektromaschine 10 bzw. des Hilfsaggregates 8 kann eine derartige (proportionale) Abhängigkeit zwischen der Drehzahl der Elektromaschinen-Drehwelle 10a bzw. des dann von der Brennkraftmaschinen-Abtriebswelle abgekoppelten Nebengetriebes 7 und der Fahrzeuggeschwindigkeit durchaus erwünscht sein, wobei bspw. in der Schaltkupplung 12 noch eine geeignete feste Übersetzung integriert sein kann.

Ein besonderer Vorteil dieser Nebenwelle 11 liegt darin, daß hiermit auch bei vom Fahrzeugantriebs-Getriebe 2 abgekoppelter Brennkraftmaschine 1 (wie üblich befindet sich zwischen diesen beiden Elementen eine Schaltkupplung oder zumindest ein Drehmomentwandler) eine Rückgewinnung der Schubernergie bzw. Bremsenergie des Kraftfahrzeuges möglich ist. Das Fahrzeugantriebs-Getriebe 2 sowie die Nebenwelle 11 werden nämlich bei Schubbetrieb des Kraftfahrzeuges von dessen Treibachse 15 (vgl. die im folgenden erläuterte Figur 3) angetrieben. Somit kann im Schubbetrieb bzw. beim Verzögern / Bremsen des Kraftfahrzeuges dessen Treibachse 15 über die Nebenwelle 11 die Elektromaschine, die dann als elektrischer Stromgenerator arbeitet, antreiben. Im übrigen können hierfür die jeweils günstigten Übersetzungsverhältnisse im Fahrzeugantriebs-Getriebe 2 auch selbsttätig (automatisch) eingestellt werden, bspw. wenn es sich bei diesem um ein sequentielles Schaltgetriebe handelt.

Auch beim Ausführungsbeispiel nach Figur 3 ist eine soeben erläuterte Nebenwelle 11 vorgesehen. Hier ist (abweichend von den bisher erläuterten Ausführungsbeispielen) die Brennkraftmaschine 1 quer zur Fahrzeug-Fahrtrichtung 14 in das Kraftfahrzeug eingebaut, d.h. die Abtriebswelle 1 verläuft parallel zur Fahrzeug-Treibachse 15, an deren Enden sich die Antriebsräder 4 des Kraftfahrzeuges befinden und in der ferner das bereits genannte Differential 13 angeordnet ist. Neben der Nebenwelle 11 sind bei diesem Ausführungsbeispiel sowohl das Fahrzeugantriebs-Getriebe 2 als auch die Elektromaschine 10 auf der gleichen Längsseite der quer zur Fahrzeug-Fahrtrichtung 14 in das Kraftfahrzeug eingebauten Brennkraftmaschine 1 angeordnet. Diese Anordnung zeichnet sich durch äußerste Kompaktheit aus. Selbstverständlich muß hier zwischen dem dem Fahrzeugantriebs-Getriebe 2 zugeordneten Endabschnitt der Brennkraftmaschinen-Abtriebswelle 3 sowie der (der Abtriebsseite 2a gegenüberliegenden) Eingangsseite des Fahrzeugantriebs-Getriebes 2 ein geeignetes Zwischengetriebe 16 vorgesehen sein.

Grundsätzlich sei darauf hingewiesen, daß eine Vielzahl von Details insbesondere konstruktiver Art durchaus abweichend von den gezeigten Ausführungsbeispielen gestaltet sein kann, ohne den Inhalt der Patentansprüche zu verlassen. So kann das Nebengetriebe 7 auch ein solches mit variabler Übersetzung, bspw. sogar stufenlos variabler Übersetzung sein, wobei die schaltbare Kupplung 6 auch geeignet in das Übersetzungsgetriebe 5 integriert sein kann. Ferner sei darauf hingewiesen, daß bei den Ausführungsbeispielen nach den Figuren 2 und 3 das Anlassen der Brennkraftmaschine 1 auch über die Nebenwelle 11 sowie über das Fahrzeugantriebs-Getriebe 2 erfolgen kann, womit sich eine erfindungsgemäße Brennkraftmaschine mit dem Nebengetriebe 7 (und somit auch diejenige nach Figur 1) durch große Betriebs-Variabilität auszeichnet. So kann das Hilfsaggregat 8 auch bei stillstehender Brennkraftmaschine 1 betrieben werden, d.h. es ist eine Standklimatisierung des Kraftfahrzeuges möglich.

Dabei sind die Anlasserfunktion sowie die Generatorfunktion in einer leistungsfähigen, kompakten und wirkungsgradoptimierten Elektromaschine 10 zusammengefasst. Für die Anlasserfunktion führt das Übersetzungsgetriebe 5 zu einer gewünschten Reduzierung der Drehmomentanforderungen an die Elektromaschine 10, während in der Generatorfunktion durch die mögliche Verblockung dieses Übersetzungsgetriebes 5 eine deutliche Reduzierung der Gesamtübersetzung möglich ist. Schließlich ergibt sich durch die Anordnung der Elektromaschine 10 im Strinseitenbereich der Brennkraftmaschine 1 ein geringstmöglicher Bauraumbedarf.

### Bezugszeichenliste:

- 1: Brennkraftmaschine
- 2: Fahrzeugantriebs-Getriebe
- 2a: Abtriebsseite (von 2)
- 3: Abtriebswelle (von 1) bzw. Achse hiervon
- 4: Antriebsrad des Kraftfahrzeuges
- 5: Übersetzungsgetriebe
- 6: schaltbare Kupplung
- 7: Nebengetriebe
- 7a,b,c: Treibrad (von 7)
- 7d: Zugmittel (von 7)
- 8: Hilfsaggregat
- 9: Übersetzungsstufe
- 10: Elektromaschine
- 10a: Drehwelle von 10 (bzw. Drehachse hiervon)
- 11: Nebenwelle
- 12: Schaltkupplung
- 13: Differential
- 14: Fahrzeug-Fahrtrichtung
- 15: Fahrzeug-Treibachse
- 16: Zwischengetriebe

## Patentansprüche

1. Brennkraftmaschine zum Antrieb eines Kraftfahrzeuges, mit einem an ein Ende der Abtriebswelle (3) der Brennkraftmaschine (1) angekoppelten Fahrzeugantriebs-Getriebe (2) sowie mit einer über ein Nebengetriebe (7) mit der Brennkraftmaschinen-Abtriebswelle (2) verbundenen Elektromaschine (10), die wahlweise als Anlassermotor oder als Stromgenerator betreibbar ist, wobei das als endloses Zugmittelgetriebe oder Rädergetriebe ausgebildete Nebengetriebe (7) mit der Abtriebswelle (3) der Brennkraftmaschine (1) an deren dem Fahrzeug-Antriebs-Getriebe (2) gegenüberliegenden Ende über eine schaltbare Kupplung (6) verbindbar ist, und dass in das Nebengetriebe (7) zumindest ein weiteres mechanisch antreibbares Hilfsaggregat (8) des Kraftfahrzeuges oder der Brennkraftmaschine (1) eingebunden ist und zwischen dem Nebengetriebe (7) und der Abtriebswelle (3) ein ggf. mehrstufiges Übersetzungsgetriebe (5) vorgesehen ist,
**dadurch gekennzeichnet, dass** eine Drehwelle (10a) der Elektromaschine (10) bei geöffneter schaltbarer Kupplung (6) zwischen der Abtriebswelle (3) und dem Nebengetriebe (7) von einer mit der Abtriebsseite (2a) des Fahrzeug-Antriebs-Getriebes (2) verbundenen Nebenwelle (11) verbindbar ist.

2. Brennkraftmaschine nach Anspruch 1,
**dadurch gekennzeichnet, dass** das Fahrzeugantriebs-Getriebe (2) sowie die Elektromaschine (10) beide auf der gleichen Längsseite der quer zur Fahrzeug-Fahrtrichtung (14) in das Kraftfahrzeug eingebauten Brennkraftmaschine (1) angeordnet sind.

## Claims

1. An internal combustion engine for driving a motor vehicle, comprising a vehicle drive unit (2) coupled to one end of the driven shaft (3) of the engine (1) and an electric machine (10) operable either as a starter motor or as a power generator, connected to the engine driven shaft (2) via a secondary gear (7), wherein the secondary gear (7), in the form of wheels or an endless tension means, is connectable via a switchable clutch (6) to the driven shaft (3) of the engine (1) at the end thereof remote from the vehicle drive unit (2), and at least one additional mechanically drivable auxiliary unit (8) of the vehicle or engine (1) is incorporated in the secondary gear (7) and an optionally multi-stage transmission gear (5) is provided between the secondary gear (7) and the driven shaft (3),
**characterised in that** when the switchable clutch (6) between the driven shaft (3) and the secondary gear (7) is opened, a rotary shaft (10a) of the electric machine (10) is connectable by a secondary shaft (11) connected to the driven side (2a) of the vehicle drive unit (11).

2. An engine according to claim 1, **characterised in that** the vehicle drive unit (2) and the electric machine (10) are both disposed on the same longitudinal side of the engine (1), which is incorporated in the vehicle at right angles to the direction of travel (14).

## Revendications

1. Moteur à combustion interne pour l'entraînement d'un véhicule, avec une boîte d'entraînement du véhicule (2) couplée à une extrémité de l'arbre de sortie (3) du moteur à combustion interne (1), ainsi qu'avec la machine électrique (10) reliée à l'arbre de sortie (2) du moteur à combustion interne via une transmission auxiliaire (7), laquelle machine électrique peut être utilisée au choix en tant que moteur de démarrage ou générateur de courant, la transmission (7) formée en tant que transmission continue par lien flexible ou en tant que train d'engrenage, pouvant être reliée à l'arbre de sortie (3) du moteur à combustion interne (1) sur son extrémité opposée à la boîte d'entraînement du véhicule (2) via un accouplement débrayable (6), alors qu'au moins un autre organe auxiliaire (8) à entraînement mécanique du véhicule ou du moteur à combustion interne (1) est engagé dans la transmission(7), avec un réducteur (5) le cas échéant à plusieurs étages prévu entre la transmission (7) et l'arbre de sortie (3),
**caractérisé en ce qu'**
un arbre tournant (10a) de la machine électrique (10) peut être relié entre l'arbre de sortie (3) et la transmission (7) par un arbre secondaire (11) relié au côté de sortie (2a) de la boîte d'entraînement du véhicule (2) lorsque l'accouplement débrayable (6) est ouvert.

2. Moteur à combustion interne selon la revendication 1,
**caractérisé en ce que**
la boîte d'entraînement du véhicule (2) ainsi que la machine électrique (10) sont tous deux disposés dans cet exemple de réalisation sur la même partie longitudinale du moteur à combustion interne (1) monté dans le véhicule transversalement à la direction de conduite (14) du véhicule.
